# EUROPEAN PATENT APPLICATION

(11) **EP 3 372 902 A1**
(43) Date of publication of application: **12.09.2018**
(21) Application number: 18460016.1
(22) Date of filing: 08.03.2018
(51) Int. Cl.: F24D 3/10, B23K 26/20, B23K 26/24, B23K 26/38

(54) **METHOD OF MANUFACTURING HYDRAULIC DISTRIBUTOR AND HYDRAULIC DISTRIBUTOR MANUFACTURED BY THE METHOD**

(30) Priority: 08.03.2017 PL 42078017
(71) Applicant: Trzepla, Zbigniew, 05-660 Warka (PL)
(72) Inventor: Trzepla, Zbigniew, 05-660 Warka (PL)
(74) Representative: Grenda, Ewa

(57) **Abstract**

A method of manufacturing a hydraulic distributor is characterised in that for each distributor body there are punched out three flat elements of the distributor body, out of which two main elements (1) are identical and the third closing element (2) has got its width three times smaller, transverse bushings (3) are stamped out and transverse openings (4) are punched out in two identical main elements (1), each of two identical main elements (1) is folded twice, to obtain "C" profiles of these main elements with three equal sides, then by means of laser welding one "C" profile of the main element (1) is bonded with the flat closing element (2) and with the second "C" profile of the main element (1) forming a rectangular distributor body with two leak-proof chambers, each having a rectangular cross-section. A hydraulic distributor is characterized in that it comprises a rectangular distributor body with two leak-proof chambers, each having a rectangular cross-section obtained by means of laser welding by bonding one "C" profile of the main element (1) with the flat closing element (2) and with the second "C" profile of the main element (1), wherein the flat closing element (2) is shared by both chambers.

## Description

The subject of the invention is a method of manufacturing a hydraulic distributor and a hydraulic distributor manufactured by this method. Hydraulic distributors are used to feeding and returning liquid from the given branch of a hydraulic system and control the direction of its flow.

A hydraulic distributor comprises a corrosion resistant metal section, for example a brass section or a stainless steel section, shaped as a pipe having round, oval, square or rectangular cross section. A hydraulic distributor comprises longitudal openings and transverse openings for arming it with terminals, hydraulic valves etc.

The known distributors are usually manufactured from mechanically cut off pipe sections or from tubes rolled-up of a metal band. The bores are usually made by mechanical, frictional pushing or drilling. If they are provided with sleeves, then the sleeves are fixed by different methods of continuous welding.

EP 1672286 (A1) discloses the manifold (1) for the liquid medium operated circuit of a hot water heating system has a feed chamber (4) and a return chamber (3) in a hollow profile. The manifold has an additional chamber (2) as a hydraulic shunt into which open out the boiler feed and return pipes (7,8), and which in its turn is connected to the feed and return chamber. The manifold is constructed as a square section hollow profile in which the feed chamber and return chamber, as well as the shunt chamber, are installed parallel and adjacent to one another.

EP 0256394 teaches a process for manufacturing a conduit for fluid or gaseous media, in particular a distributor conduit provided with a connection opening with outlet openings arranged in a conduit wall, especially for internal combustion engines, wherein the conduit, which is made from at least one sheet metal strip, is formed by laser- or electron beam welding of abutting ends facing each other without a gap, characterised in that the distributor conduit is formed from two parts of sheet metal strips equipped with flanges, wherein, at least in one of the sheet metal strips, a crease is arranged to run in a longitudinal direction between longitudinal flanges, which is constructed in both end regions of the sheet metal strip in each case to end at a distance from the end delimitation, leaving transverse flanges which connect the longitudinal flanges, and that the abutting ends of the flanges of both parts are clamped against each other without a gap for a welding of the parts in the abutting ends by means of a laser- or electron beam directed transversely to the abutting ends.

PL 212469 (B1) teaches a distributor of liquids, applied particularly in water central heating systems, particularly for floor heating and also in utility hot water systems. The said distributor comprises a body in form of a pipe section with assembly end terminals on both frontal sides. The body comprises two mutually opposite flattened surfaces. The flattened surfaces comprise arranged openings to connect conduits distributing liquid. The openings include flanges, directed towards the inside of the body, being its integral parts and provided with internal thread. The body is in the shape of a square cross section pipe piece having internally threaded bushings in both ends. The subject of this invention is also a method of manufacturing a distributor of liquids, according to which, in the upper and lower wall of the square cross section pipe piece there are made openings by stamping the flanges towards the centre of the pipe with the simultaneous pressing out the internal thread. Afterwards the bushings are mounted in both ends of the body pipe and bonded by hard soldering with copper paste in the temperature above 1080°C in the protective atmosphere for about 1.5 hour.

Additionally Polish patent application PL. 403133 discloses a method of manufacturing a hydraulic distributor, in which there is prepared a pipe section of the required length and of the required cross section, constituting a distributor profile, a required number of coaxial transverse openings are made in mutually opposite walls of the distributor profile, capping lids are seated in longitudinal openings of the distributor profile, transverse bushings are seated in transverse openings of the distributor profile, the capping lids and the transverse bushings are fixed in the distributor profile and the capping openings of the capping lids and the capping openings of the transverse bushings are deepened and threaded, wherein the pipe section and the transverse openings are made by means of laser cutting and the capping lids and the transverse bushings are fixed and sealed by means of laser-beam fusion welding. A hydraulic distributor according to the invention constitutes a distributor profile of corrosion resistant metal with a square cross section, manufactured according to the method according to the invention.

The aim of the present invention is to provide a more effective and less expensive method of manufacturing a hydraulic distributor. The aim of the present invention is also to provide an effective method of manufacturing a hydraulic distributor ensuring precision of manufacturing and lasting and leak-proof joining of the distributor elements. The aim of the present invention is also to substitute two single distributors in the hydraulic distribution box by one compact two chamber distributor with lasting and leak-proof joining of its elements.

The said aims have been achieved by a method of manufacturing a hydraulic distributor, in which there are prepared flat elements of the distributor body of the required dimensions from a corrosion resistant metal sheet of required thickness, a required number of transverse bushings and openings are made in these elements and finally the final treatment is carried out, wherein the distributor body has a rectangular cross-section, capping lids with capping openings are seated in longitudinal openings of the distributor body, the capping lids with capping openings are fixed and sealed in the distributor body and the capping openings of the capping lids and the capping openings of the transverse bushings are deepened and threaded, wherein the capping lids are fixed and sealed by means of laser-beam fusion welding, wherein the capping lids are seated so, that their external surfaces are at the most at the level of adjoining external surfaces of the distributor body, wherein the method is characterised in that for each distributor body there are punched out three flat elements of the distributor body, out of which two main elements are identical and the third closing element has got its width about three times smaller, transverse bushings are stamped out and transverse openings are punched out in two identical main elements, each of two identical main elements is folded twice, to obtain "C" profiles of these main elements with three sides, then by means of laser welding one "C" profile of the main element is bonded with the flat closing element and with the second "C" profile of the main element forming a rectangular distributor body with two leak-proof chambers, each having a rectangular cross-section, wherein the flat closing element is shared by both chambers.

Advantageously, four transverse openings are punched out along each longer edge in each of the two identical main elements.

Advantageously, from 1 to 15 transverse openings are punched out along each longer edge in each of the two identical main elements.

Advantageously, one transverse opening is punched out along the first longer edge and four transverse openings are punched out along the second longer edge in each of the two identical main elements.

Advantageously, one transverse opening is punched out along the first longer edge and from 1 to 15 transverse openings are punched out along the second longer edge in each of the two identical main elements.

Advantageously, the capping lids are fixed and sealed by means of laser-beam fusion welding, advantageously by means of impulse laser-beam fusion welding.

Advantageously, the laser-beam fusion welding is carried out in a protective gas atmosphere, advantageously in argon.

In advantageous embodiment the duration of the impulse in the laser-beam fusion welding is 40 - 80 ms.

Advantageously, the power of the impulse in the laser-beam fusion welding is 600 - 1000 W.

The energy of the impulse in the laser-beam fusion welding is, advantageously, 220 - 300 J.

Advantageously, the step of deepening and threading of the capping openings of the capping lids and the capping openings of the transverse bushings follows the step of fixing and sealing of the capping lids in the distributor profile.

Advantageously, the final treatment comprises etching end passivation.

The aim of the present invention has also been achieved by a hydraulic distributor in which a distributor profile of corrosion resistant metal constitutes a pipe section with a rectangular cross section, wherein transverse openings with transverse bushings are in mutually opposite walls of the distributor profile, wherein capping lids with capping openings are seated in longitudinal openings of the distributor profile, the capping lids are fixed and sealed in the distributor profile and the capping openings of the capping lids and the capping openings of the transverse bushings are threaded, the capping lids are fixed and sealed by means of laser-beam fusion welding, wherein the capping lids and the transverse bushings are seated and fixed so, that their external surfaces are at the most at the level of adjoining external surfaces of the distributor profile, characterized in that it comprises a rectangular distributor body with two leak-proof chambers, each having a rectangular cross-section obtained by means of laser welding by bonding one "C" profile of the main element with the flat closing element and with the second "C" profile of the main element, wherein the flat closing element is shared by both chambers.

Advantageously, the distributor body comprises eight transverse openings with the transverse bushings in each of the bigger sides.

Advantageously, the distributor body comprises from 2 to 30 transverse openings with the transverse bushings in each of the bigger sides.

Advantageously, the distributor body comprises eight transverse openings with the transverse bushings in one of the bigger sides and two transverse openings with the transverse bushings in the second of the bigger sides.

Advantageously, the distributor body comprises from 2 to 30 transverse openings with the transverse bushings in one of the bigger sides and two transverse openings with the transverse bushings in the second of the bigger sides.

Advantageously, the transverse bushings are integral with the side walls of the distributor body as they have been stamped out of them.

In advantageous embodiment the capping lids are fixed and sealed by means of impulse laser-beam fusion welding.

The present invention will be described in detail in advantageous example of embodiment with reference to the attached drawings, where:
- Fig. 1 presents in a perspective view flat main element of the distributor body,
- Fig. 2 presents in a perspective view flat closing element of the distributor body,
- Fig. 3A presents in a perspective view main element of the distributor body folded once,
- Fig. 3B presents in a perspective view main element of the distributor body folded twice,
- Fig. 4 presents in a perspective view main element of the distributor body folded twice with the flat closing element welded to it,
- Fig. 5 presents in an exploded perspective view the distributor body before seating of the capping lids ,
- Fig. 6 presents in a perspective view the complete distributor body with eight transverse openings in each of the bigger side walls, and
- Fig. 7 presents in a perspective view the complete distributor body with eight transverse openings in one of the bigger side walls and two transverse openings in the second of the bigger side walls.

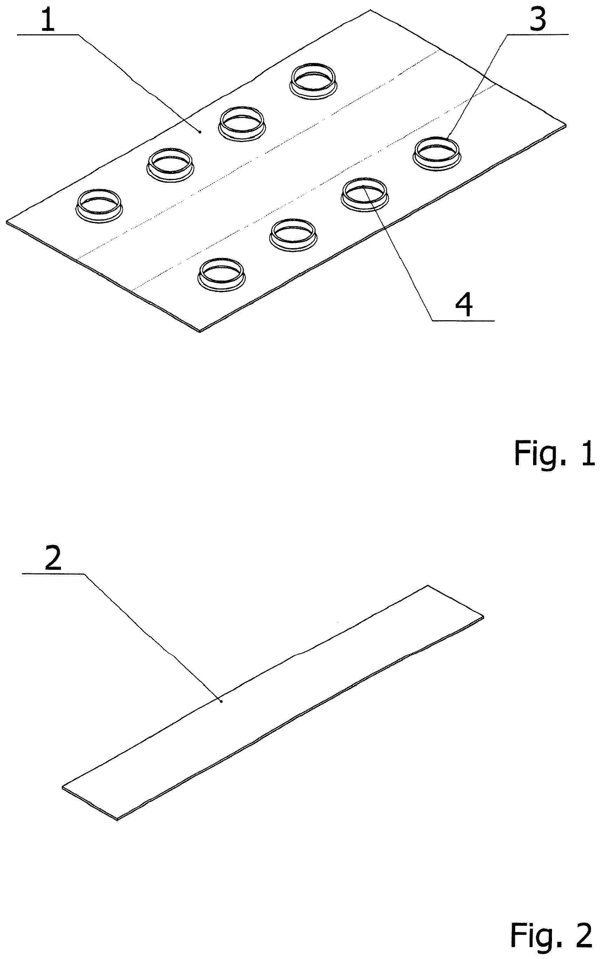

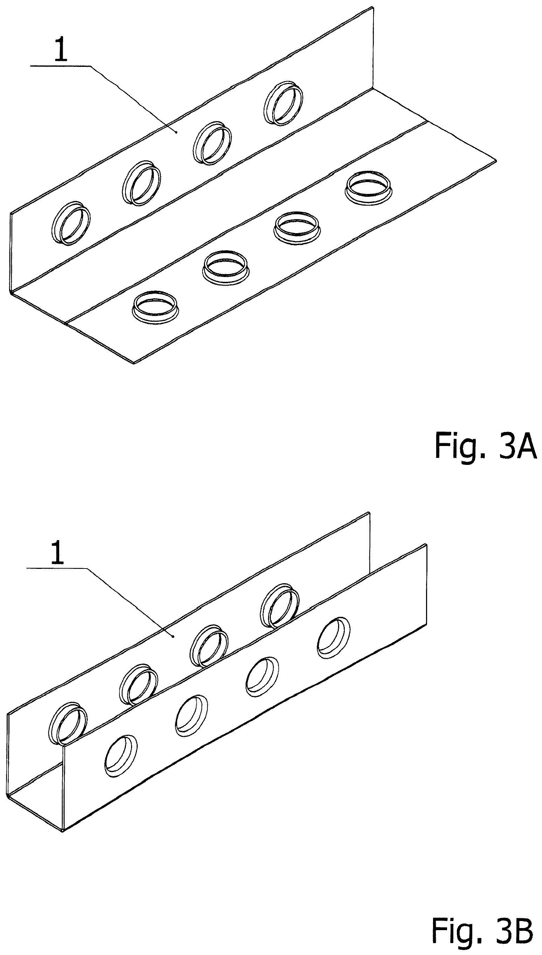

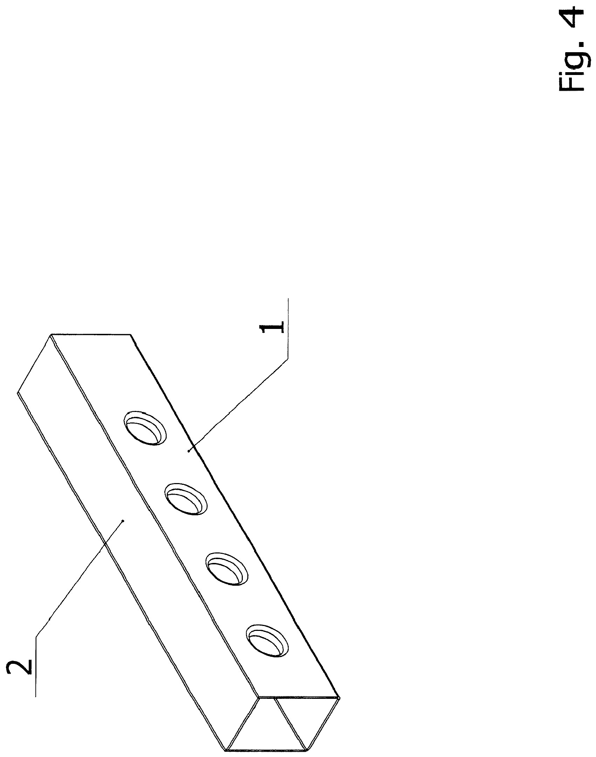

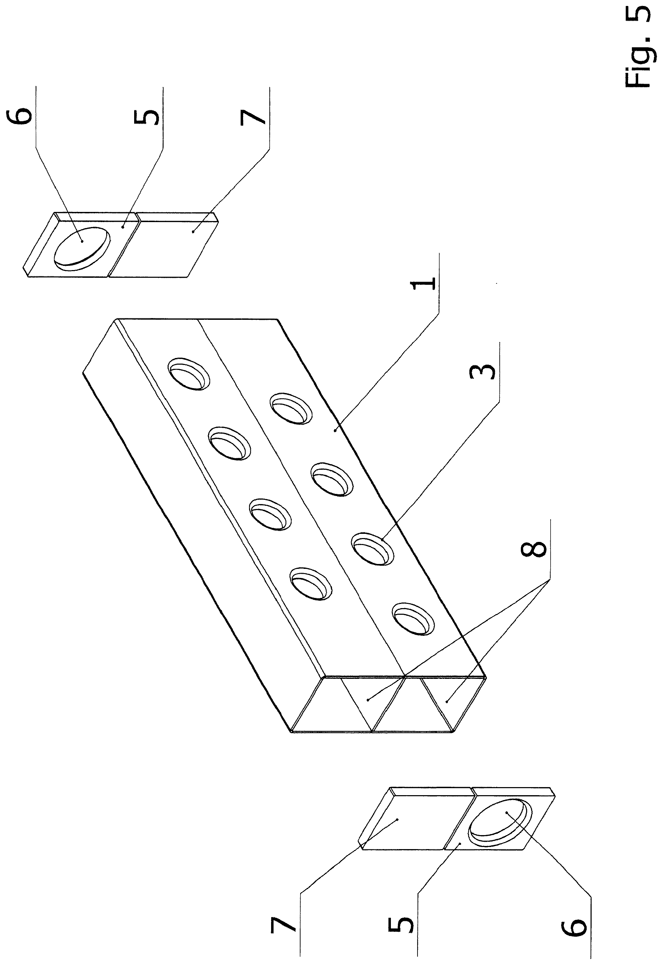

The method of manufacturing a hydraulic distributor according to the present invention comprises the following steps:
- for each distributor body there are punched out three flat elements of the distributor body, out of which two main elements 1 (Fig. 1) are identical and the third closing element 2, a shown in the Fig. 2 has got its width about three times smaller, wherein as shown in the Fig. 1, transverse bushings 3 are stamped out and transverse openings 4 are punched out in two identical main elements 1, then the transverse openings 4 are threaded,
- each of two identical main elements 1 is folded twice, to obtain "C" profiles of these main elements with three sides, as shown in the Fig. 3A and 3B, wherein the Fig. 3A presents in a perspective view main element 1 of the distributor body folded once and the Fig. 3B presents in a perspective view main element 1 of the distributor body folded twice,
- then by means of laser welding one "C" profile of the main element 1 is bonded with the flat closing element 2, a shown in the Fig. 4,
- and by means of laser welding obtained rectangular cross- section profile is bonded with the second "C" profile of the main element 1 forming a rectangular distributor body with two leak-proof chambers, each having a rectangular cross-section, as shown in the Fig. 5,
- also, as shown in the Fig. 5, the flow capping lids 5 with capping openings 6 and the blind capping lids 7 are seated in longitudinal openings 8 of the distributor body, then all capping lids are fixed and sealed in the distributor body and the capping openings 6 of the flow capping lids 5 and the capping openings 4 of the transverse bushings 3 are deepened and threaded, wherein all capping lids are fixed and sealed by means of laser-beam fusion welding, wherein all capping lids are seated so, that their external surfaces are at the most at the level of adjoining external surfaces of the distributor body,
- finally the final treatment of the distributor body is carried out.

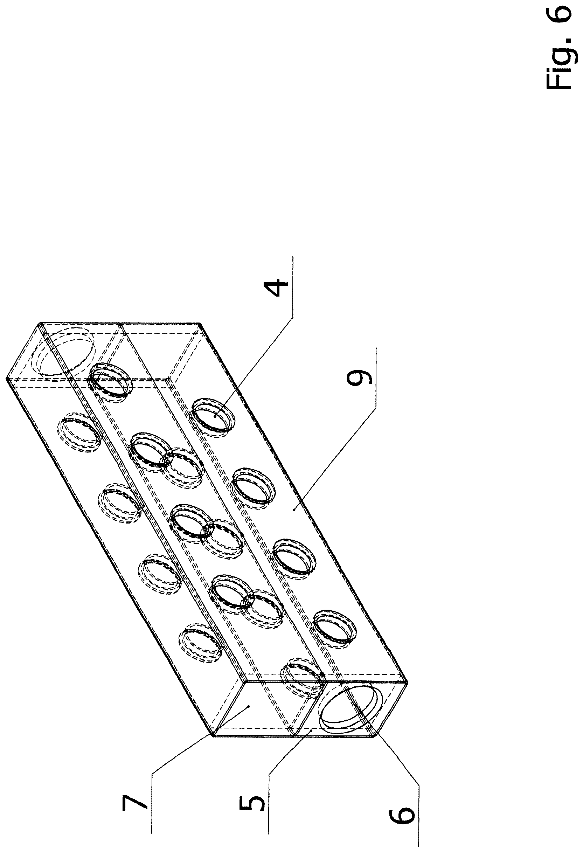

As presented in the Fig. 6, the complete distributor body can be manufactured with eight transverse openings 4 in each of the bigger side walls 9, in case when four transverse openings 4 are punched out along each longer edge in each of the two identical main elements 1.

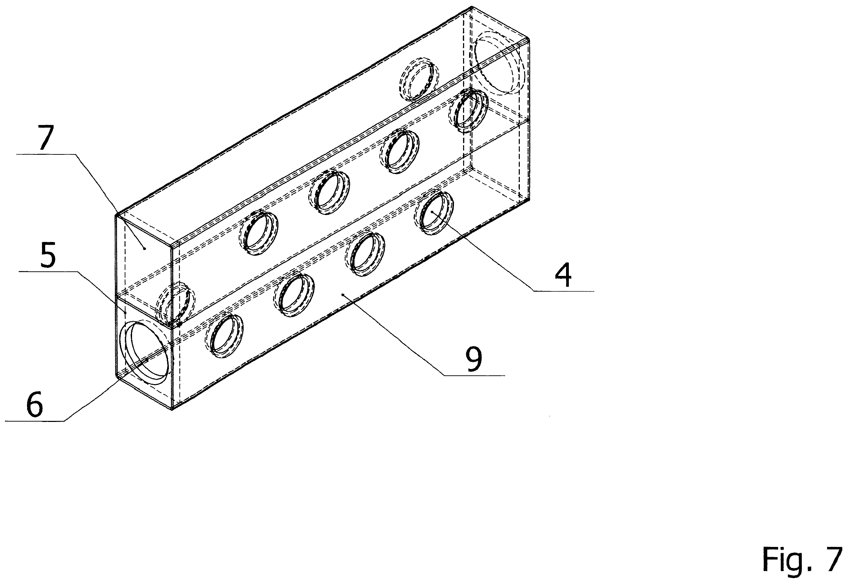

As presented in the Fig. 7, the complete distributor body can also be manufactured with eight transverse openings 4 in one of the bigger side walls 9 and two transverse openings 4 in the second of the bigger side walls 9, in case when one transverse opening 4 is punched out along the first longer edge and four transverse openings 4 are punched out along the second longer edge in each of the two identical main elements 1.

The figures 6 and 7 show the complete distributor body, wherein the Fig. 6 presents in a perspective view the complete distributor body with eight transverse openings 4 in each of the bigger side walls 9, and the Fig. 7 presents in a perspective view the complete distributor body with eight transverse openings 4 in one of the bigger side walls 9 and two transverse openings 4 in the second of the bigger side walls 9. The hydraulic distributor comprises generally a profile of corrosion resistant metal in the form of a pipe section with a rectangular cross section, wherein transverse openings 4 with transverse bushings 3 are in mutually opposite walls 9 of the distributor profile, wherein the flow capping lids 5 with capping openings 6 and the blind capping lids 7 are seated in longitudinal openings 8 of the distributor profile. All capping lids are fixed and sealed in the distributor profile and the capping openings 6 of the flow capping lids 5 and the capping openings 4 of the transverse bushings 4 are threaded. All capping lids are fixed and sealed by means of laser-beam fusion welding, wherein capping lids and the transverse bushings 3 are seated and fixed so, that their external surfaces are at the most at the level of adjoining external surfaces of the distributor profile, characterized in that it comprises a rectangular distributor body with two leak-proof chambers, each having a rectangular cross-section obtained by means of laser welding by bonding one "C" profile of the main element 1 with the flat closing element 2 and with the second "C" profile of the main element 1, wherein the flat closing element 2 is shared by both chambers.

Advantageously, the distributor body comprises eight transverse openings 4 with the transverse bushings 3 in each of the bigger sides (see Fig. 6).

Advantageously, the distributor body comprises up to 30 transverse openings 4 with the transverse bushings 3 in each of the bigger sides.

Advantageously, the distributor body comprises eight transverse openings 4 with the transverse bushings 3 in one of the bigger sides and two transverse openings 4 with the transverse bushings 3 in the second of the bigger sides (see Fig. 7).

Advantageously, the distributor body comprises from 2 to 30 transverse openings 4 with the transverse bushings 3 in one of the bigger sides and two transverse openings 4 with the transverse bushings 3 in the second of the bigger sides.

Advantageously, the transverse bushings 3 are integral with the side walls of the distributor body as they have been stamped out of them.

The method according to the present invention a more effective and less expensive process of manufacturing a hydraulic distributor. It provides a process of manufacturing a hydraulic distributor with high precision of manufacturing and lasting and leak-proof joining of the distributor elements. The present invention enables to substitute two single distributors in the hydraulic distribution box by one compact two chamber distributor having a large cross-section, with lasting and leak-proof joining of its elements.

Radiation sources of YAG type are used. The laser beam is generated by a synthetic, yttrium aluminium garnet rod with addition of neodymium ions, as a result of inciting the rod at atom level by means of high power krypton lamps. A laser beam is shaped by a suitable optic system and by means of flexible optic cables directed to the place of welding. High concentration of energy in the very small surface (1.5 x 10⁴ W/mm²) causes melting of metal in thousandth parts of a second. Laser-beam fusion welding enables permanent joining of the same material elements, as well as elements from different metals, e.g. copper and aluminium. The main advantage of laser welding is a high quality joint, which perfectly works also in bonding different metals. Additionally, the radiation absorbing coat is not damaged, which is the case in traditional methods. The following advantage is purity of the process due to lack of fluxing agents which are essential in the case of soldering, and which may cause advancement of corrosion. Furthermore, laser-beam fusion welding implies the least harmful ecological effects.

The best results as to the quality and durability of connections and of sealing them are achieved with the following parameters of laser welding: protecting gas is argon, duration of the impulse is 40 - 80 ms, power of the impulse is 600 - 1000 W, energy of the impulse is 220 - 300 J.

Additionally, such parameters of the laser-beam fusion welding enable achievement of the depth of laser beam penetration to about 75% of the depth of connection, owing to which the connection surfaces situated on the internal side of the profile are not affected by stress and deformation caused by temperature and atmosphere.

Final steps comprise etching and passivation, necessary after the steps of welding and mechanical treatment.

The aim of etching is to remove dirt such as welding scale, oxide layers, colour changes, foreign corrosion as well as metallic particles and organic impurities pressed into the surface during mechanical treatment. Only very clean and purely metallic surface enables forming of passivation layer protecting stainless steel against corrosion.

## Claims

1. A method of manufacturing a hydraulic distributor, in which there are prepared flat elements of the distributor body of the required dimensions from a corrosion resistant metal sheet of required thickness, a required number of transverse bushings and openings are made in these elements and finally the final treatment is carried out, wherein the distributor body has a rectangular cross-section, capping lids with capping openings are seated in longitudinal openings of the distributor body, the capping lids with capping openings are fixed and sealed in the distributor body and the capping openings of the capping lids and the capping openings of the transverse bushings are deepened and threaded, wherein the capping lids are fixed and sealed by means of laser-beam fusion welding, wherein the capping lids are seated so, that their external surfaces are at the most at the level of adjoining external surfaces of the distributor body, **characterised in that** for each distributor body there are punched out three flat elements of the distributor body, out of which two main elements (1) are identical and the third closing element (2) has got its width three times smaller, transverse bushings (3) are stamped out and transverse openings (4) are punched out in two identical main elements (1), each of two identical main elements (1) is folded twice, to obtain "C" profiles of these main elements with three sides, then by means of laser welding one "C" profile of the main element (1) is bonded with the flat closing element (2) and with the second "C" profile of the main element (1) forming a rectangular distributor body with two leak-proof chambers, each having a rectangular cross-section, wherein the flat closing element (2) is shared by both chambers.

2. The method according to claim 1, **characterized in that** four transverse openings (4) are punched out along each longer edge in each of the two identical main elements (1).

3. The method according to claim 1, **characterized in that** from 1 to 15 transverse openings (4) are punched out along each longer edge in each of the two identical main elements (1).

4. The method according to claim 1, **characterized in that** one transverse opening (4) is punched out along the first longer edge and four transverse openings (4) are punched out along the second longer edge in each of the two identical main elements (1)

5. The method according to claim 1, **characterized in that** one transverse opening (4) is punched out along the first longer edge and from 1 to 15 transverse openings (4) are punched out along the second longer edge in each of the two identical main elements (1).

6. The method according to claim 1, **characterized in that** the flow capping lids (5) and the blind capping lids (7) are fixed and sealed by means of impulse laser-beam fusion welding.

7. The method according to claim 6, **characterized in that** the laser-beam fusion welding is carried out in a protective gas atmosphere, advantageously in argon.

8. The method according to claim 6, **characterized in that** the duration of the impulse in the laser-beam fusion welding is 40 - 80 ms.

9. The method according to claim 6, **characterized in that** the power of the impulse in the laser-beam fusion welding is 600 - 1000 W.

10. The method according to claim 6, **characterized in that** the energy of the impulse in the laser-beam fusion welding is, advantageously, 220 - 300 J.

11. The method according to claim 1, **characterized in that** the step of deepening and threading of the capping openings (2) of the capping lids (1) and the capping openings of the transverse bushings (4) follows the step of fixing and sealing of the transverse bushings (4) in the distributor profile.

12. The method according to claim 1, **characterized in that** the final treatment comprises etching end passivation.

13. A hydraulic distributor in which a distributor profile of corrosion resistant metal constitutes a pipe section with a rectangular cross section, wherein transverse openings with transverse bushings are in mutually opposite walls of the distributor profile, wherein capping lids with capping openings are seated in longitudinal openings of the distributor profile, the capping lids are fixed and sealed in the distributor profile and the capping openings of the capping lids and the capping openings of the transverse bushings are threaded, the capping lids are fixed and sealed by means of laser-beam fusion welding, wherein the capping lids and the transverse bushings are seated and fixed so, that their external surfaces are at the most at the level of adjoining external surfaces of the distributor profile, **characterized in that** it comprises a rectangular distributor body with two leak-proof chambers, each having a rectangular cross-section obtained by means of laser welding by bonding one "C" profile of the main element (1) with the flat closing element (2) and with the second "C" profile of the main element (1), wherein the flat closing element (2) is shared by both chambers.

14. The hydraulic distributor according to claim 13, **characterized in that** the distributor body comprises eight transverse openings (4) with the transverse bushings (3) in each of the bigger sides.

15. The hydraulic distributor according to claim 13, **characterized in that** the distributor body comprises from 2 to 30 transverse openings (4) with the transverse bushings (3) in each of the bigger sides.

16. The hydraulic distributor according to claim 13, **characterized in that** the distributor body comprises eight transverse openings (4) with the transverse bushings (3) in one of the bigger sides and two transverse openings (4) with the transverse bushings (3) in the second of the bigger sides.

17. The hydraulic distributor according to claim 13, **characterized in that** the distributor body comprises from 2 to 30 transverse openings (4) with the transverse bushings (3) in one of the bigger sides and two transverse openings (4) with the transverse bushings (3) in the second of the bigger sides.

18. The hydraulic distributor according to claim 13, **characterized in that** the transverse bushings (3) are integral with the side walls (9) of the distributor body as they have been stamped out of them.

19. The hydraulic distributor according to 13, **characterized in that** all capping lids (5, 7) are fixed and sealed by means of impulse laser-beam fusion welding.
